# EUROPÄISCHE PATENTSCHRIFT

(11) **EP 0 653 980 B1**
(45) Veröffentlichungstag und Bekanntmachung des Hinweises auf die Patenterteilung: **18.12.1996**
(21) Anmeldenummer: 94916976.7
(22) Anmeldetag: 19.05.1994
(51) Int. Cl.: B29C 47/16

(54) **BREITSCHLITZDÜSE**
FISHTAIL DIE
FILIERE PLATE

(30) Priorität: 20.05.1993 DE 4316913
(43) Veröffentlichungstag der Anmeldung: 24.05.1995
(73) Patentinhaber: Brückner Maschinenbau GmbH, 83313 Siegsdorf (DE)
(72) Erfinder: SÄNZE, Johannes, D-83346 Bergen (DE); BREIL, Jürgen, D-83355 Grabenstätt (DE); LINDNER, Paul, A-5302 Henndorf (AT); RÜHLEMANN, Ulrich, D-38278 Traunstein (DE)
(74) Vertreter: Flach, Dieter Dipl.-Phys.
(86) Internationale Anmeldenummer: EP9401630
(87) Internationale Veröffentlichungsnummer: WO9427802

(56) Entgegenhaltungen:
- EP-A- 0 257 233
- EP-A- 0 383 418
- WO-A-86/06678
- DE-A- 3 834 720

## Beschreibung

Die Erfindung betrifft eine Breitschlitzdüse einer Extrusionsanlage zur Herstellung von Flachfolien nach den Oberbegriffen der Ansprüche 1, 2 und 3.

Derartige Breitschlitzdüsen werden bei der Kunststoffolienbahn-Herstellung eingesetzt. Zumindest eine der beiden Düsenlippen ist dabei flexibel gestaltet, um den Austrittsspalt einer Feineinstellung und -regulierung entsprechend den gewonnenen Meßdaten unterziehen zu können. Die einstellbare Lippe wird dabei in der Regel durch eine Materialverjüngung gebildet, worüber über in der Länge veränderbare Stellglieder eine entsprechende Biegebelastung auf die zumindest eine einstellbare Dichtlippe ausgeübt wird, um dadurch die Verstellung zu bewirken.

Es sind bereits eine Vielzahl von Breitschlitzdüsen betreffende Vorveröffentlichungen bekannt geworden, bei denen der Austrittsspalt beispielsweise mittels thermisch aufheiz- und damit in ihrer Länge veränderbaren Stellgliedern vergrößert und verkleinert werden kann. Die spaltregulierende Werkzeuglippe kann bei anderen Ausführungsformen beispielsweise mittels eines auf dem piezoresistiven Effekt basierenden Feldtranslators ebenso vorgenommen werden.

Eine gattungsbildende Extrusions-Breitschlitzdüse ist aus der EP-A2-0 383 418 bekannt geworden. Sie umfaßt eine Vielzahl von nebeneinander längs der Breitschlitzdüse angeordneten Stellgliedern, die an ihrer rückwärtigen Seite einzeln an einem Düsenkörperabschnitt abgestützt sind, der eine Voreinstelljustiermöglichkeit für jedes einzelne Stellglied umfaßt.

Aus der EP 0 367 022 A2 ist beispielsweise eine Extrusions-Schlitzdüse bekannt geworden, die eine Vielzahl von auf ein flexibles Band einwirkenden passiven Stellgliedern umfaßt, wobei ferner noch eine Mehrzahl von zwischen dem Band und der flexiblen Lippe beweglich angeordneten Lamellen zur Einleitung der Stellkraft von dem flexiblen Band auf die Lippe vorgesehen sind. Dadurch soll eine möglichst schmalbandige Regelung des Austrittspaltes ohne Erhöhung der Zahl oder des Abstandes der aktiven Stellglieder ermöglicht werden, was mangels ausreichendem Bauraum auch nicht möglich wäre.

Aus der DE 37 31 961 A1 ist eine Vorrichtung zur Spalteinstellung einer Düse mittels eines Thermobolzens bekannt geworden, der zudem eine Luftkühlung zur schnelleren Kühlung des Thermobolzens und damit zur Kontraktion des Stellgliedes umfaßt.

Dazu sind in dem Thermobolzen axiale Kühlkanäle vorgesehen, worüber über einen anschließbaren Druckluftschlauch eine entsprechende Kühlluftmenge eingestellt und damit die Kühlleistung variiert werden kann. Bei der Kühlluft handelt es sich im allgemeinen um Druckluft. Der Thermobolzen selbst ist auch hier wieder als übliches Zug-/Druckelement ausgebildet.

Weitere Stellglieder für den Austrittsspalt mit Kühleinrichtungen sind u. a. beispielsweise auch aus der EP 0 383 418, der DE 36 28 974 C1, der EP 0 257 233 B1, der EP 0 256 490 B1 sowie der EP 0 229 680 B1 bekannt geworden. Diese Vorveröffentlichungen umfassen ebenfalls Kühlkanäle, durch die in der Regel Luft als Kühlmittel gesteuert hindurchströmen kann. In der EP 0 229 680 B1 ist auch beschrieben, daß als Kühlmedium auch eine Flüssigkeit umströmen kann, z. B. Wasser.

Die Breitschlitzdüsen nach dem Stand der Technik weisen aber durchaus Nachteile auf, die bei der Herstellung von Kunststoffolien für den Wickelprozeß relevant sind.

So besteht ein für derartige Anlagen generelles Problem darin, daß bei der Wickelstation mit zunehmender Aufwikkeldicke der Kunststoffolien-Bahn aufgrund bestehender Dickenvariationen der Kunststoffolie Dick- oder Dünnstellen auftreten, die ein völlig gleichmäßiges Aufwickeln ohne jede Verdickung oder Erhebung über die gesamte Folienbreite hinweg nicht erlauben.

Spätere Generationen von Breitschlitzdüsen haben zwar schon gewisse Verbesserungen im Hinblick auf die gewünschte Folienqualität ermöglicht (geringere Dickentoleranzen). Gleichwohl sind die erzielten Ergebnisse nach heutiger Sicht immer noch nicht befriedigend.

Dabei liegt das Hauptproblem in dem für eine optimale Folienqualität zu breiten Einflußbereich eines Stellgliedes, der zum einen in den aus geometrischen Gründen der Anordnung weiten Abstand der aktiven Stellglieder von über 25 mm und zum anderen in einer massiven Ausbildung der flexiblen Lippe und der daraus resultierenden Biegelinie begründet ist. Insbesondere bei Folien (wie z.B. BOPP) die in ihrer Breite verstreckt werden, liegt der auf den Endfilm bezogene Einflußbereich bei einem Stellgliedabstand von 28 mm bei über 230 mm, wobei durch die Biegelinie der flexiblen Lippe mindestens zwei Nachbarzonen auf jeder Seite beinflußt werden. Somit sind kleine Dickentoleranzunterschiede mit einer Breite von z.B. 100 mm, die sich beim Aufwickeln zu sogenannten "Kolbenringen" kumulieren können, nicht mehr ausreichend korrigierbar.

Ein weiteres Problem liegt bisher darin, daß die Einstellgeschwindigkeit der Stellglieder zu langsam ist, mit der Folge, daß beachtliche Folienlängen extrudiert und aufgewickelt werden, bis dann erst bei einer festgestellten oder gemessenen Abweichung der Foliendicke von einem Sollmaß eine entsprechende Nachregelung durchgeführt werden kann.

Schließlich hat sich bei Breitschlitzdüsen nach dem Stand der Technik gezeigt, daß die Verstelleinheit gegenüber den Umgebungseinflüssen so weit als möglich unempfindlich sein sollte und eine größtmögliche Zuverlässigkeit aufweisen sollte.

Aufgabe der vorliegenden Erfindung ist es deshalb, insbesondere ausgehend von dem eingangs genannten Stand der Technik, eine verbesserte Breitschlitzdüse mit deutlich erhöhter Zahl von aktiven Stellelementen zu schaffen, mit der geringere Dickentoleranzen der herzustellenden Folienbahn und damit eine Verbesserung der Folienqualität erzielbar ist. Dabei soll die Breitschlitzdüse auch möglichst unempfindlich gegenüber Umgebungseinflüssen zur Erhöhung der Funktionsstabilität sein.

In einer besonders bevorzugten Weiterbildung der Erfindung soll dabei gleichwohl eine ausreichend hohe Einstellgeschwindigkeit der Stellglieder zur Erzielung des gewünschten Dickenprofils sichergestellt werden.

Die Aufgabe wird erfindungsgemäß entsprechend den in den unabhängigen Ansprüchen angegebenen Merkmalen gelöst. Vorteilhafte Ausgestaltungen der Erfindung sind in den abhängigen Unteransprüchen angegeben.

Durch die vorliegende Erfindung werden durchaus wichtige Verbesserungen erzielt. Es hat sich nämlich als durchaus überraschend gezeigt, daß trotz der bei der gattungsbildenden EP 0 367 022 A2 verwandten Vielzahl von beweglich angeordneten Lamellen, die gewünschte Schmalbandigkeit der Biegelinie gleichwohl doch nicht einstellbar ist. Denn durch die Verwendung des darin beschriebenen flexiblen Bandes als Übertragungsglied von den Stellgliedern auf die Mehrzahl der flexiblen Lamellen stellt sich eine gewisse "unscharfe Übertragungsfunktion" ein (weil keine aktiven Stellglieder mit geringem Abstand verwendet werden), mit der Folge, daß letztlich die Schmalbandigkeit der Einstellung nicht oder nicht entscheidend verbessert werden kann.

Eine deutliche Erhöhung der Schmalbandigkeit jedoch, d.h. eine sehr viel höhere Einstellgenauigkeit und Regelungsmöglichkeit bezogen auf die Folienbreite aber führt - und dies ist in dem Ausmaß ebenfalls durchaus überraschend - zu bisher nicht für möglich erachteten Qualitätsverbesserungen bezüglich der Folientoleranz. Dies zeigt sich dann letztlich auch in einem deutlich verbesserten Wickelergebnis, da hier nunmehr die im Stand der Technik sonst festzustellenden Dickstellen am Folienwickel nicht oder nicht in diesem Ausmaß auftreten.

Schließlich muß es auch als überraschend bezeichnet werden, daß es grundsätzlich technisch realisierbar ist, eine Vielzahl von Stellgliedern mit in dem beanspruchten Bereich geringer Dimensionierung an der Vorrichtung unterzubringen. Denn insbesondere die Stellgliedlagerung mit den dafür erforderlichen, eine Grundeinstellung ermöglichenden Einstellelementen beansprucht in der Regel einen derart großen Bauraum, daß eine "Miniaturisierung" der Stellglieder und die Erzielung einer derartigen Schmalbandigkeit der Einstellmöglichkeit bisher nicht vorstellbar war.

In einer bevorzugten Ausführungsform der Erfindung ist ferner noch bei der trotz deutlich erhöhten Anzahl der Einstellbolzen eine Zwangskühlung vorgesehen, durch die sich eine kurze Einstellgeschwindigkeit der Einstellbolzen erzielen läßt.

Die erfindungsgemäße Breitschlitzdüse zeichnet sich also unter anderem dadurch aus, daß zur Erhöhung der Anzahl der einstellbaren Stellgliedern 13 bezüglich der Gesamtlänge der Düsenlippen 3, 5 jeweils zumindest zwei benachbart zueinander liegenden Stellgliedern 13 eine gemeinsame Voreinstellungseinrichtung 37 zugeordnet ist, und/oder zwei in Längsrichtung des Austrittspaltes 1 aufeinanderfolgende benachbarte Stellglieder 13 an ihrem zur einstellbaren Düsenlippe 3, 5 abgewandt liegenden Ende mit Querversatz zur Längsrichtung des Austrittspaltes 1 angeordnet sind bzw. enden und somit die zugehörigen Voreinstelleinrichtungen 37 zweier benachbarter Stellglieder 13 mit entsprechendem Querversatz zueinander liegen und/oder beide Düsenlippen 3, 5 mit in ihrer Länge regelbaren Stellgliedern 13 derart versehen sind, daß die der einen Düsenlippe 3 zugeordneten Stellglieder 13 zu den der anderen Düsenlippen 5 zugeordneten Stellglieder 13 versetzt zueinander angeordnet sind, und daß zumindest den auf einer der beiden Düsenlippen 3, 5 einwirkenden Stellgliedern 13 eine Voreinstellungseinrichtung 37 zugeordnet ist.

Dabei ist den einstellbaren Stellgliedern oder zumindest einer der beiden Lippen (an denen gegebenenfalls die einstellbaren Stellglieder auch nicht direkt angreifen) eine Grob- oder Voreinstellungseinrichtung zugeordnet.

Die erfindungsgemäße Breitschlitzdüse weist ganz besondere Vorteile bei Verwendung in Reckanlagen bei der Kunststofffolienherstellung auf. Die Vorteile sind aber immer noch überraschend auch für die Herstellung eines sog. Cast-Filmes.

Weitere Vorteile, Einzelheiten und Merkmale der Erfindung ergeben sich nachfolgend aus dem anhand von Zeichnungen dargestellten Ausführungsbeispiel. Dabei zeigen im einzelnen:
- Figur 1 :: eine schematische Querschnittdarstellung quer zur Längrichtung der Breitschlitzdüse
- Figur 2 :: eine Seitendarstellung dreier zu einer Gruppe gehörenden Einstellglieder;
- Figur 3 :: eine schematische frontseitige Draufsicht auf die Breitschlitzdüse bei weggelassener Kühlluft-Umlenkeinrichtung;
- Figur 4 :: eine axiale Längsschnittdarstellung durch eine abgewandelte manuelle Voreinstell-Einrichtung zu Einstellung des Düsenspaltes;
- Figur 5 :: eine Prinzipdarstellung in Querschnittsansicht bezüglich eines zu Figur 1 abgewandelten Ausführungsbeispieles;
- Figur 6 :: eine weitere Abwandlung zu Figur 3;
- Figur 7 :: ein weiteres Ausführungsbeispiel in schematischer Querschnittsdarstellung quer zur Längsrichtung der Breitschlitzdüse; und
- Figur 8 :: eine auszugsweise Draufsicht auf die Breitschlitzdüse bezüglich eines weiteren Ausführungsbeispieles.
- Figur 9 :: eine auszugsweise schematische Draufsicht einer motorisch bzw. automatisch betätigbaren Voreinstellungs-Einrichtung zur Einstellung des Düsenspaltes;
- Figur 10 :: eine Querschnittsdarstellung längs der Linie X - X in Figur 9.

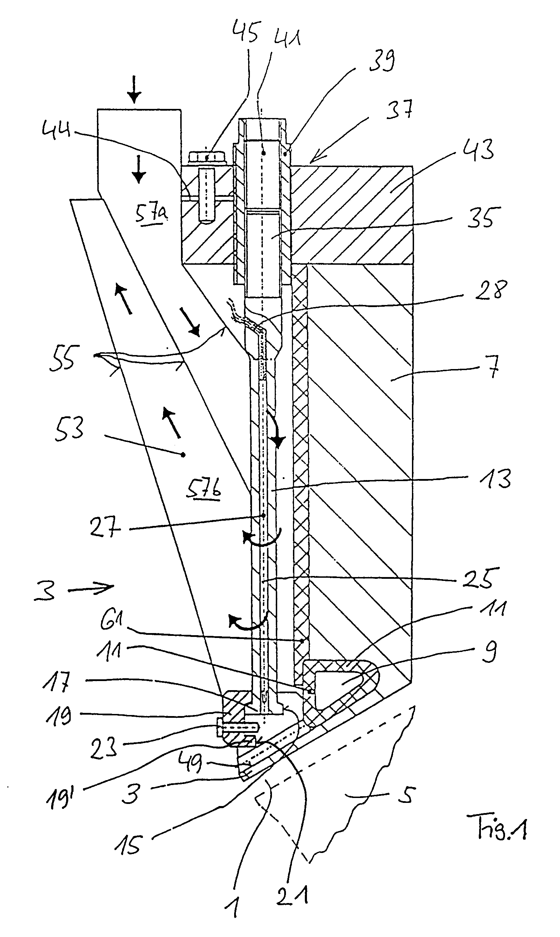

In Figur 1 und 2 ist ein erstes Ausführungsbeispiel der Breitschlitzdüse mit einer einen Austrittsspalt 1 begrenzenden oberen und unteren Düsenlippe 3, 5 gezeigt. In Figur 1 erstreckt sich der Austrittsspalt 1 senkrecht zur Zeichenebene.

Die untere Düsenlippe 5 ist dabei nur schematisch angedeutet.

Bei der oberen Düsenlippe 3 geht der eigentliche, mit vergleichsweise dickem Materialquerschnitt ausgebildete rückwärtige Düsenkörper 7 an seinem unteren Ende in die durch Druck- und/oder Zugbeanspruchung einstellbare obere Düsenlippe 3 über. Dazu ist an dem Übergangsbereich von dem Düsenkörper 7 zur Düsenlippe 3 eine parallel zum Austrittsspalt 1 verlaufende Ausnehmung 9 als Materialschwächung eingebracht, in welcher eine schlauchförmige Dichtung 11 eingesetzt ist.

Die obere Düsenlippe 3 weist auf die nachfolgend noch erläuterten Stellglieder 13 zuliegend eine im Querschnitt schwalbenschwanzförmige Ausnehmung 15 auf, in welcher der Verankerungskopf 17 der Stellglieder 13 eingesetzt wird.

Gesichert wird der Verankerungskopf 17 an seiner Außenseite über den einzelnen Stellgliedern 13 zugeordnete in der Breite auf die Breite bzw. den Abstand zweier benachbarter Stellglieder 13 abgestimmte Halter 19, die mit einer den nach außen weisenden Teil der schwalbenschwanzförmigen Erweiterung des Verankerungskopfes 17 übergreifenden Nase versehen sind. Die Halter 19 weisen an ihrem der Düsenlippe 3 zuweisenden Ende zudem einen weiteren in eine schlitzförmige Vertiefung 21 eingreifenden Halteabschnitt 19' auf und sind über Schrauben 23 einzeln an der oberen Düsenlippe 3 befestigt.

Die aktiven, d.h. entsprechend ansteuerbaren Stellbolzen 13 weisen im gezeigten Ausführungsbeispiel einen rechteckförmigen Querschnitt mit einer Breite b von beispielsweise 8,5 mm und einer Tiefe oder Dicke von 12 mm auf und sind mit einer innenliegenden Bohrung 25 mit geeignetem Durchmesser versehen, in welche eine Heizpatrone 27 in Längsrichtung des Stellgliedes 13 eingesetzt ist. Die jeweiligen Anschlußdrähte 28 der Heizpatrone sind durch eine rückwärtige seitlich liegende Öffnung 30 aus dem jeweiligen Einstellglied herausgeführt.

Aus Platzgründen und zur Verringerung der Einstellzeit bezüglich der mechanischen Voreinstellung des Düsenspaltes 1 sowie zur Realisierung eines geringen Stellgliedabstandes sind im gezeigten Ausführungsbeispiel jeweils drei Stellglieder zu einer Gruppe oder einem Paket 29 zusammengefaßt (Figur 2 und 3). D.h. an ihrem rückwärtigen Ende sitzen die zu einer Gruppe 29 zusammengefaßten Stellglieder 13 auf einer gemeinsamen Basis 31. Im gezeigten Ausführungsbeispiel ist jede Gruppe 29 der Stellglieder 13 einstückig hergestellt und die einzelnen Stellglieder durch Einbringung von Längsschlitzen 33 aus einem Materialblock herausgearbeitet.

In entgegengesetzter Richtung zu den Stellgliedern 13 ragt rückwärtig von der Basis 31 ein mit einem Außengewinde versehener Gewindezapfen 35 vor, der über ein Differentialschraubgetriebe 37 als manuell betätigbare Verstelleinrichtung über eine Ankerplatte mit dem Düsenkörper 7 verbunden ist.

Das Differentialschraubgetriebe 37 besteht dabei aus einer mit Innen- und Außengewinde versehenen Differentialmutter 39, wobei das Innen- und Außengewinde an der Differentialmutter 39 unterschiedliche Gewindesteigungen aufweisen, so daß durch Verdrehen der Differentialmutter 39 im Gewindekörper 7 letztlich auch die Axiallage jeweils einer Gruppe 29 von Stellgliedern 13 mit hoher Einstellgenauigkeit verstellt wird.

Durch rückwärtiges Eindrehen eines der Konterung dienenden Gewindezapfens 41 in die Differentialmutter 39 kann nach Beendigung der Voreinstellung des Düsenspaltes eine Konterung zur verdrehsicheren Fixierung des zur Basis 31 gehörenden Gewindezapfens 35 in der Differentialmutter 39 vorgenommen werden.

Darüber hinaus ist die in den Zeichnungen dargstellte und mit dem Düsenkörper 7 durch Schrauben fest verbundene Grundplatte oder Traverse 43 quer zur Axialrichtung der Differentialmutter 39 zumindest einseitig geschlitzt, wobei eine Konterschraube 45 diesen Plattenschlitz 44 durchsetzt und durch Festdrehen eine Fixierung und Klemmung erzielt, die ein Gewindespiel und eine unerwünschte Verstellung der Differentialmutter 39 und damit des Differentialschraubgetriebes 37 sicher unterbindet und ausschließt. Die vorstehend erläuterte Zusammenfügung dieser Stellglieder bildet gleichzeitig auch die Schnittstelle zur automatisierten Düsenspaltvoreinstellung.

Abweichend von der in Figur 1 gezeigten und vorstehend beschriebenen mechanischen Voreinstellungs-Einrichtung zur Grund-Vorjustierung des Düsenspaltes kann eine Schlitzausnehmung der Grundplatte oder Traverse 43 bei geeigneter räumlicher Anbringung auch in axialer Längsrichtung vorgesehen sein, wobei dann die Schraube in entsprechender Querausrichtung dazu den Schlitz übergreifend die beiden benachbart zum Schlitz liegenden Teile der Grundplatte oder Traverse 43 verspannen würde.

Anhand von Figur 4 ist noch ein abgewandeltes Ausführungsbeispiel einer mechanischen, d.h. manuell betätigbaren Verstelleinrichtung 36 der Vor- bzw. Grundjustierung des Düsenspaltes in axialem Längsschnitt gezeigt.

In dieser Ausführungsform ist in die Grundplatte oder Traverse 43 ebenfalls wieder in eine entsprechende Bohrung eine mit Innen- und Außengewinde mit unterschiedlichem Gewindegang versehene Differenzialmutter 39 als Differentialschraubgetriebe 37 eingedreht. Der Gewindezapfen 35 der Gruppe 29 von Stellgliedern 13 ist von unten her in die Differentialmutter 39 eingedreht, wobei von oben her eine vorzugsweise in Form einer Madenschraube gebildete Schraube bzw. ein Gewindezapfen 41 entgegengesetzt eingedreht wird.

Zwischen den aufeinander zu liegenden Stirnseiten des Gewindezapfens 35 und 41 ist ein Stift oder Bolzen 42 mit vorzugsweise gegenüberliegenden balligen Stirnseiten 46 eingefügt.

Wesentlich ist nunmehr, daß die Differentialmutter 39 mehrere, im gezeigten Ausführungsbeispiel vier senkrecht zu deren Längsachse gegenüberliegend eingebrachte Schlitze 48 aufweist, deren Radialtiefe über den Mittelpunkt der Achse der Differentialmutter 39 hinaus reicht und beispielsweise eine Tiefe von mehr als 60%, vorzugsweise mehr als 70%, insbesondere um 75% und mehr des Durchmessers oder Innendurchmessers der Diffenzialschraube 39 aufweist.

Durch Eindrehen der Madenschraube 41 weiten sich nunmehr die Schlitze 48 der Differenzialschraube 39 auf, wodurch deren Außengewinde sich mit dem Innengewinde der Grundplatte oder der Traverse 43 verspannt. Dies ist dadurch möglich, da zwischen der Madenschraube 41 und dem Gewindezapfen 35 der erwähnte Stift oder Bolzen 42 eingebracht ist. Durch diese Konstruktion läßt sich die erwähnte spielfreie Spannung erzielen, ohne daß ein Schlitz mit einer Klemmschraube, wie beim Ausführungsbeispiel gemäß Figuren 1 bis 3, vorgesehen sein muß.

Wie aus dem gezeigten Ausführungsbeispiel, insbesondere aus Figur 2 und 3, zu ersehen ist, läßt sich durch den geschilderten Aufbau ein sehr geringer Stellgliedabstand erzielen. Die Breite b der einzelnen Stellglieder beträgt dabei beispielsweise um 8,5 mm. Der lichte Abstand d zwischen zwei Stellgliedern beträgt beispielsweise um die 1,5 mm. D.h. mit anderen Worten, daß mit einer Wiederholungsrate oder -folge a von 10 mm jeweils ein weiteres Stellglied 13 angeordnet werden kann.

Zur Erzielung einer schmalbandigen Biegelinie der Düsenlippe 3 ist diese analog des Abstandes zwischen zwei benachbarten Stellgliedern, d.h. mit gleicher Wiederholungsrate zu den Längsschlitzen 33 zwischen den Stellgliedern Und vorzugsweise deckungsgleich dazu geschlitzt. Zur Reduzierung der mechanischen Spannung und zur Erzielung einer biegeweichen Lippe laufen diese Lippenschlitze 47 in Bohrungen 49 mit beispielsweise 4 bis 8 mm, vorzugsweise um 6 mm Durchmesser aus. Die verbleibende Restwandstärke 51 von beispielsweise 1,5 bis 6 mm, vorzugsweise um 2 bis 4 mm, insbesondere 3 mm vom Bohrungsgrund bis zur Schmelzaustrittskante, also der Unterseite der Düsenlippe 3, kommt ebenfalls einer schmalbandigen Biegelinie zu gute.

Im gezeigten Ausführungsbeispiel ist schließlich auch noch eine Kühleinrichtung 53 mit einem durch Bleche 55 getrennten Doppelkanalsystem 57a und 57b vorgesehen. Durch den oberen Kanalschacht 57a wird beispielsweise Kühlluft zwangsweise zugeführt, die durch die Längsschlitze 33 der Einstellbolzen hindurchströmen und diese nicht nur front-, sondern auch rückseitig umströmen und damit kühlen kann. Gemäß der Pfeildarstellung strömt dann das die Stellbolzen 13 kühlende Kühlmedium durch den unteren Schacht 57b wieder aus und wird von der Breitschlitzdüse weggeführt. Durch die erwähnte Leiteinrichtung wird also das Kühlmedium durch die Spalte oder Längsschlitze 33 hindurchgepreßt, so daß es die obere Bolzenhälfte der Stellglieder 13 von oben nach unten und in der unteren Bolzenhälfte von unten nach oben durchströmen kann. In Seiteneinrichtung in Längsrichtung des Düsenspaltes ist die Leitblechanordnung jeweils am Ende des Lippenspaltes abgedeckt. Abweichend von dem Ausführungsbeispiel mit einer in Längsrichtung der einzelnen Einstellelemente verlaufende Zuführung und Wegführung des umströmenden Kühlmediums kann natürlich auch ein Umströmen in Querrichtung zu den Stellgliedern oder eine Kombination aus beiden angewandt werden.

Schließlich ist gegenüberliegend zu der Leitblechanordnung für die Kühleinrichtung an der zu der rückwärtigen Seite der Stellglieder 13 verlaufenden Wand des Düsenkörpers 7 eine Isolierung 61 vorgesehen.

Daß die Kühlluft nicht an anderen Stellen austreten kann, ist in der erwähnten Ausnehmung 9 die schlauchförmige Dichtung 11 eingesetzt. Zudem ist zwischen den einzelnen Stellgliedern im Bereich der Verankerungsköpfe 17 in den zwischen zwei benachbarten Stellgliedern gebildeten Längsschlitzen 33 in Figur 3 die nicht weiter eingezeichnete plattenförmige Isolierung eingesetzt, die sich beispielsweise bis in den Seitenbereich der Halter 19 erstrecken kann. Auch hier kann also die umströmende Luft nicht austreten, sondern wird über den zweiten Schacht 57b wieder abgeführt.

Bevorzugt wird die Kühlluft kontinuierlich und ständig umgewälzt und allein durch Aufheizung die Einstellung der Düsenlippe vorgenommen. Bei einem Ausbleiben des Heizvorganges wird durch die ständig umgewälzte Kühlluft eine schnelle Kühlung der Stellglieder bewerkstelligt, wobei durch die Temperaturänderung in der positiven wie negativen Richtung jeweils um eine Temperaturnullage die spielfreie Längenausdehnung wie Kontraktion und damit verbunden die jeweilige Druckbe- oder Zugentlastung der oberen Düsenlippe 3 durchgeführt wird.

Abweichend vom gezeigten Ausführungsbeispiel können natürlich auch nur zwei oder mehr als drei Stellglieder oder -bolzen 13 zu jeweils einer Gruppe oder Paket 29 vereinigt sein.

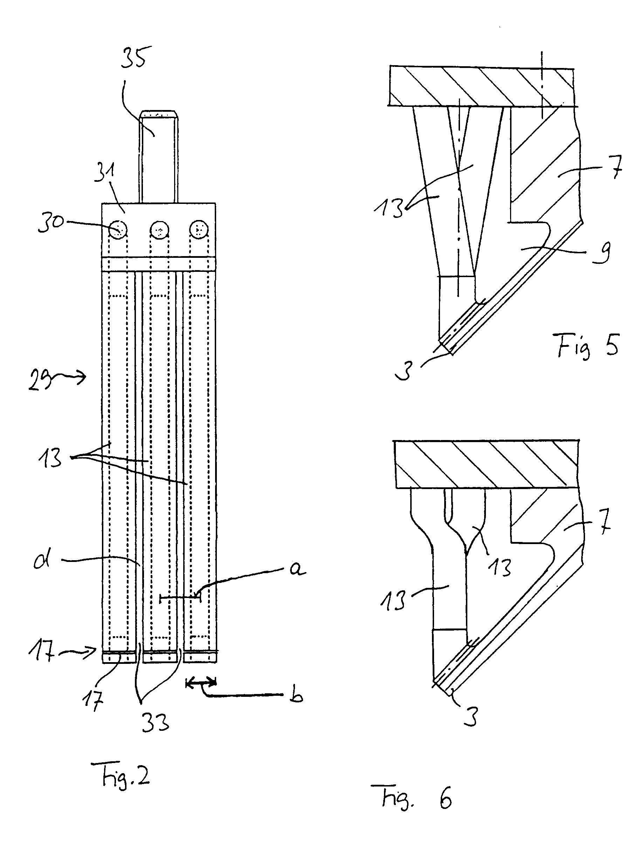

Anhand von Figur 5 ist nur in schematischer Querschnittsdarstellung gezeigt, daß anstelle einer rückwärtigen Grobjustierung für eine Gruppe von beispielsweise zwei Einstellgliedern auch eine rückwärtige Grobjustierung bei noch ausreichenden Raumverhältnissen für das erwähnte Differentialschraubgetriebe 37 möglich ist, wenn jeweils zwei benachbart sitzende Thermodehnbolzen, also Einstellglieder 13 in Querschnittsdarstellung V-förmig versetzt zueinander liegend angeordnet sind. Dadurch ist es möglich, für jedes einzelne Stellglied 13 eine separate Grundeinstellung beispielsweise in Form eines Differentialschraubgetriebes 37 vorzusehen, wobei dann jeweils aufgrund der versetzten Anordnung zweier benachbart liegender Stellglieder der doppelte Raum zur Verfügung steht.

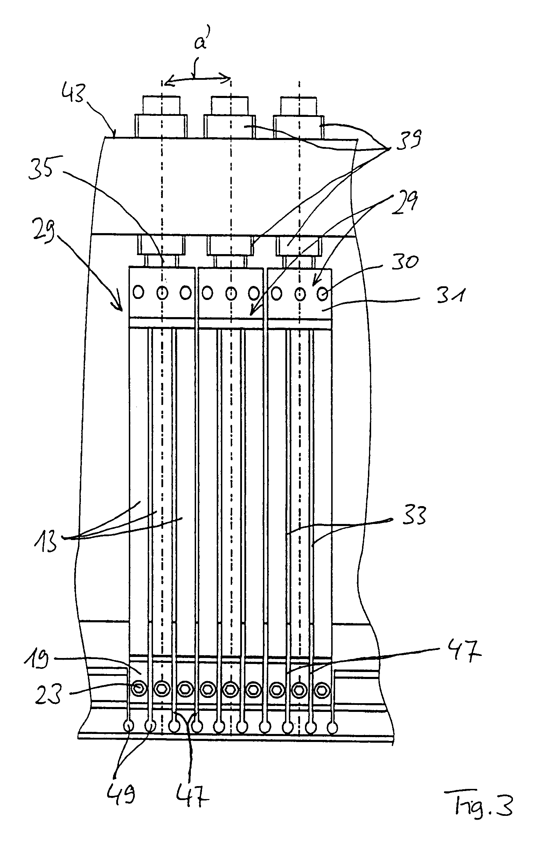

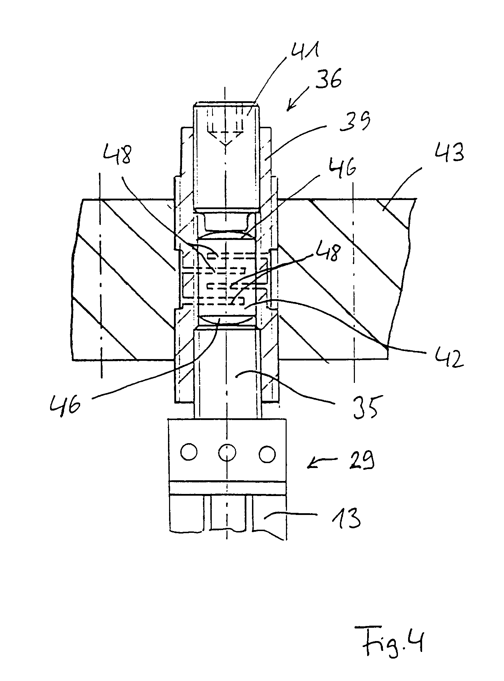

Bei dem Ausführungsbeispiel gemäß Figur 6 wird das gleiche Ergebnis durch Verwendung von an ihrem Ende jeweils versetzt zueinander gekröpft verlaufenden Stellgliedern erreicht.

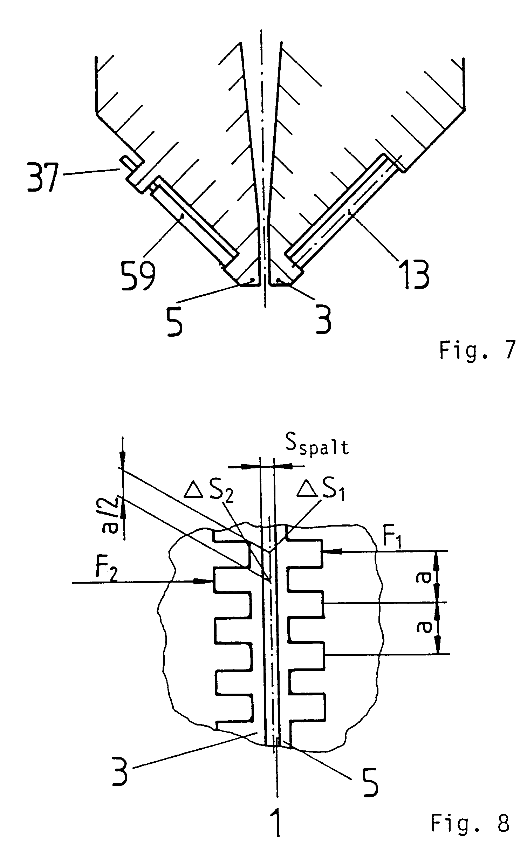

In einer weiteren Abwandlung gemäß Figur 7 ist vorgesehen, daß die mechanische Voreinstellung 59 beispielsweise an der unteren Düsenlippe 5 und z.B. eine Automatikverstellung unter Verwendung der noch zu erläuternden ansteuerbaren Stellglieder 13 an der jeweils anderen, im gezeigten Ausführungsbeispiel oberen Düsenlippe 3 vorgesehen und durchgeführt wird. In diesem Falle ist bei den eng nebeneinander sitzenden Stellgliedern dann die Bauraum erfordernde Grundjustiereinrichtung in Form beispielsweise des erwähnten Differentialschraubgetriebes 37 nicht erforderlich. Diese Grundeinstellung beispielsweise durch Verwendung eines Differentialschraubgetriebes 37 kann dann an der jeweils anderen Dichtlippe durchgeführt werden.

Schließlich ist anhand des Ausführungsbeispieles gemäß Figur 8 gezeigt, daß beide Dichtlippen 3 und 5 mit einer Automatikverstellung unter Verwendung von ansteuerbaren Stellgliedern 13 versehen sein können. In diesem Ausführungsbeispiel sind jedoch die Stellglieder 13' beispielsweise der einen Düsenlippe 3 zu den Stellgliedern 13'' auf der anderen Düsenlippe 5 jeweils um eine halbe Abstandslänge a versetzt zueinander liegend angeordnet. D.h. auf jeder Dichtlippe steht ein ausreichender Abstand zur Unterbringung des Differentialschraubgetriebes 37 zur Verfügung, obgleich durch die doppelte Verwendung der Stellglieder 13 auf beiden Dichtlippen der gleiche enge Regelungsabstand wie anhand des Ausführungsbeispieles gemäß Figur 1 bis 3 erzielt wird.

Schließlich wird auch noch erwähnt, daß in Abweichung von der beschriebenen Heizpatrone, also in Abweichung von der beschriebenen Thermodehn- und Kontraktionsbolzen, auch Stellglieder verwandt werden können, die piezomechanisch oder magnetostriktiv arbeiten. Ebenso sind Prinzipien anwendbar, die eine Volumenänderung der Stellglieder beispielsweise auf elektrochemischem Wege zur Folge haben.

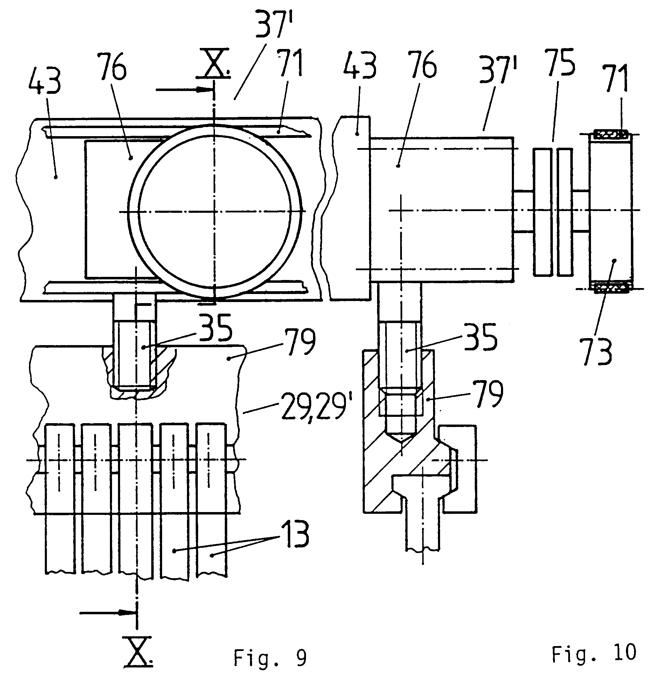

Anhand von Figur 9 und 10 ist ein weiteres Ausführungsbeispiel für eine motorisch betreibbare und nachfolgend auch als automatische Verstelleinrichtung bezeichnete Möglichkeit zur mechanischen und vor allem auch ständig nachregelbaren Vor- und Grobeinstellung des Düsenspaltes beschrieben.

Bei dieser automatisch und motorisch betätigbaren Verstelleinrichtung 37' ist beispielsweise ein in den Figuren 9 und 10 nicht näher dargestellter Elektro-Motor vorgesehen, der zentral über einen umlaufenden Zahnriemen 71 oder einem vergleichbaren Antriebsmechanismus mehrere in einem Abstand von beispielsweise 60 mm, 90 mm, 120 mm etc. sitzende Ritzel 73 antreibt, die mit entsprechender Drehzahl rotieren. Je nach dem, welche Gruppe 29 von Stellgliedern 13 oder welcher Gruppenabschnitt 29' mit mehreren darüber vorjustierbaren Stellgliedern 13 eingestellt werden soll, wird der Kraftfluß durch Zuschaltung einer im gezeigten Ausführungsbeispiel axial zur Achse des Ritzels 73 versetzt liegenden Schaltkupplung 75 über ein nachgeordnetes Getriebe, vorzugsweise in Form eines Schneckengetriebes 76 auf einen parallel zur Grundplatte oder Traverse 43 verlaufenden Biegebalken 79 übertragen. Die erwähnten Schneckengetriebe 76 sind wie erwähnt an der Traverse 43 befestigt. Durch eine entsprechende Voreinstellung des Biegebalkens 79 kann die Düsenlippe 3 über die Stellglieder 13 im Sinne eines vorwählbaren Profils bzw. Profilverlaufs voreingestellt werden. Aber auch während des Betriebes kann ständig über den motorischen Antrieb zielgerichtet und gesteuert eine unterschiedliche Vor- und Grundeinstellung des Düsenspaltes 3 motorisch eingestellt werden.

Im gezeigten Ausführungsbeispiel wird also über das Schneckengetriebe 76 durch axiales Verstellen (Ein- und Ausdrehen) des Gewindezapfens 35 eine Axialverstellung des Biegebalkens 79 in Richtung der Stellglieder 13 vorgenommen.

Aus Figur 10 geht dabei auch hervor, daß die Stellglieder 13 an ihren den Biegebalken 79 zuweisenden Enden mittels eines Befestigungsmechanismus befestigt sind, der vom Grundaufbau der Einspanneinrichtung des düsenlippenseitigen Endes der Stellglieder 13 gemäß Figur 1 entspricht. Mit anderen Worten sind die biegebalken-seitigen Enden 83 schwalbenschwanzförmig gestaltet, sind mit einer schwalbenschwanzförmigen Seite in eine entsprechende Ausnehmung des Biegebalkens 79 eingesetzt und zur gegenüberliegenden durch eine entsprechend U-förmige dem Halter 19 entsprechenden Klammer oder Halter 85 gesichert.

Bei der motorisch betätigbaren Verstelleinrichtung 37' gemäß Figur 9 und 10 können die einzelnen Kupplungen 75 einzeln nacheinander oder auch mehrere Kupplungen gleichzeitig, also simultan betätigt und dadurch die Biegebalken an mehreren Stellen gleichzeitig ver- und eingestellt werden. Sofern ein oder mehrere Gewindezapfen 35 gegensinnig verdreht werden sollen, müssen die betreffenden Kupplungen nacheinander zugeschaltet werden, nachdem zuvor die Drehrichtung der Antriebs-Übertragungseinrichtung, im gezeigten Ausführungsbeispiel des Zahnriemens 71, geändert wurde (in der Regel durch Drehrichtungsumkehrung des den Zahnriemen antreibenden Motors).

## Patentansprüche

1. Breitschlitzdüse einer Extrusionsanlage zur Herstellung von Flachfolien, bestehend aus einem oberen und einem unteren Düsenteil mit einer oberen und unteren Düsenlippe (3, 5), die den Austrittsspalt (1) nach oben und unten begrenzen, wobei mindestens eine der beiden Düsenlippen (3, 5) in ihrem vorderen Bereich durch entsprechende Ansteuerung mittels in ihrer Länge einstellbaren Stellgliedern (13) flexibel justierbar ist, und mit den einstellbaren Stellgliedern (13) zugeordneten Grob- oder Voreinstellungseinrichtungen (37), **dadurch gekennzeichnet**, daß in Längsrichtung des Austrittsspaltes (1) und damit quer zur Richtung der Extrudatströmung benachbart zueinander liegende Stellglieder (13) zu Gruppen mit zumindest jeweils zwei Stellgliedern (13) zusammengefaßt sind, denen eine gemeinsame Grob- oder Voreinstellungseinrichtung (37) zugeordnet ist.

2. Breitschlitzdüse einer Extrusionsanlage zur Herstellung von Flachfolien, bestehend aus einem oberen und einem unteren Düsenteil mit einer oberen und unteren Düsenlippe (3, 5), die den Austrittsspalt (1) nach oben und unten begrenzen, wobei mindestens eine der beiden Düsenlippen (3, 5) in ihrem vorderen Bereich durch entsprechende Ansteuerung mittels in ihrer Länge einstellbaren Stellgliedern (13) flexibel justierbar ist, und mit den einstellbaren Stellgliedern (13) zugeordneten Grob- oder Voreinstellungseinrichtungen (37), **dadurch gekennzeichnet**, daß zwei in Längsrichtung des Austrittspaltes (1) und damit quer zur Richtung der Extrudatströmung aufeinanderfolgende benachbarte Stellglieder (13) an ihren zur einstellbaren Düsenlippe (3, 5) abgewandt liegenden Enden mit Querversatz, d.h. quer zur Längsrichtung des Austrittspaltes (1) versetzt angeordnet sind oder enden, und somit die zugehörigen Grob- oder Voreinstelleinrichtungen (37) zweier benachbarter Stellglieder (13) mit entsprechendem Querversatz quer zur Längsrichtung des Austrittsspaltes (1) zueinander liegen.

3. Breitschlitzdüse einer Extrusionsanlage zur Herstellung von Flachfolien, bestehend aus einem oberen und einem unteren Düsenteil mit einer oberen und unteren Düsenlippe (3, 5), die den Austrittsspalt (1) nach oben und unten begrenzen, wobei mindestens eine der beiden Düsenlippen (3, 5) in ihrem vorderen Bereich durch entsprechende Ansteuerung mittels in ihrer Länge einstellbaren Stellgliedern (13) flexibel justierbar ist, und mit den einstellbaren Stellgliedern (13) zugeordneten Grob- oder Voreinstellungseinrichtungen (37), **dadurch gekennzeichnet**, daß beide Düsenlippen (3, 5) mit in ihrer Länge regelbaren Stellgliedern (13) derart versehen sind, daß die der einen Düsenlippe (3) zugeordneten Stellglieder (13) zu den der anderen Düsenlippe (5) zugeordneten Stellgliedern (13) versetzt zueinander angeordnet sind, und daß zumindest den auf einer der beiden Düsenlippen (3, 5) einwirkenden Stellgliedern (13) eine Voreinstellungseinrichtung (37) zugeordnet ist.

4. Breitschlitzdüse nach Anspruch 1, **dadurch gekennzeichnet**, daß die für die Stellglieder (13) vorgesehenen Voreinstellungseinrichtungen (37) in Längsrichtung des Austrittsspaltes (1) mit einem Wiederholungsabstandsmaß (a'), das dem Abstand von Mitte zu Mitte zweier benachbarter Stellglieder (13) entspricht, angeordnet sind, welches größer ist als das Wiederholungsabstandsmaß (a) der Stellglieder (13) und welches vorzugsweise zumindest dem doppelten Wiederholungsabstandsmaß (a) der Stellglieder (13) entspricht.

5. Breitschlitzdüse nach Anspruch 1 oder 4, **dadurch gekennzeichnet**, daß eine zumindest zwei Stellglieder (13) umfassende Gruppe (29) im wesentlichen einstückig hergestellt und durch Einbringung von zumindest einem Längsschlitz (33) in die entsprechende Anzahl von Stellgliedern (13) gegliedert ist, die an ihrer der Düsenlippe (3, 5) abliegenden Seite auf einer die Stellglieder (13) verbindenden Basis (31) sitzen.

6. Breitschlitzdüse nach Anspruch 2, **dadurch gekennzeichnet**, daß benachbarte Stellglieder (13) vorgesehen sind, die in in Längsrichtung des Austrittsspaltes (1) verlaufender Seitenansicht von der einstellbaren Düsenlippe (3, 5) zu ihrem rückwärtigen Ende in etwa V-förmig divergierend angeordnet sind bzw. verlaufen.

7. Breitschlitzdüse nach Anspruch 2, **dadurch gekennzeichnet**, daß benachbarte Stellglieder (13) vorgesehen sind, die in in Längsrichtung des Austrittsspaltes (1) verlaufender Seitenansicht von der einstellbaren Düsenlippe (3, 5) zu dem rückwärtigen Ende der Stellglieder (13) entgegengesetzt gekröpft verlaufend ausgebildet sind.

8. Breitschlitzdüse nach einem der Ansprüche 1 bis 7, **dadurch gekennzeichnet**, daß die Stellglieder (13) in Richtung des Austrittsspaltes (1) in einer Wiederholungsfolge (a) mit einem Abstand von Mitte zu Mitte zweier benachbarter Stellglieder (13) von weniger als 25 mm, vorzugsweise weniger als 20 mm angeordnet sind, und daß die Breite (b) der Stellglieder (13) in Richtung des Austrittsspaltes (1) weniger als 20 mm beträgt.

9. Breitschlitzdüse nach einem der Ansprüche 1 bis 8, **dadurch gekennzeichnet**, daß das Distanzmaß der Wiederholungsfolge (a) zweier aufeinander folgenden Stellglieder (13) weniger als 16 mm, vorzugsweise kleiner als 12 mm, insbesondere um 10 mm ist.

10. Breitschlitzdüse nach einem der Ansprüche 1 bis 9, **dadurch gekennzeichnet**, daß die Breite (b) der einzelnen Stellglieder (13) kleiner als 10 mm, insbesondere kleiner als 9 mm, insbesondere um 8 bis 9 mm ist.

11. Breitschlitzdüse nach einem der Ansprüche 1 bis 10, **dadurch gekennzeichnet**, daß der lichte Abstand (d) zweier aufeinander folgender Stellglieder (13) kleiner als 8 mm, insbesondere kleiner als 6 mm, kleiner als 4 mm und insbesondere kleiner als 1,5 mm ist.

12. Breitschlitzdüse nach einem der Ansprüche 3 oder 8, 9, 10 oder 11 wenn abhängig von Anspruch 3 bis 7, 8, 9 oder 10, **dadurch gekennzeichnet**, daß die der einen Düsenlippe (3) zugeordneten Stellglieder (13) um das halbe Distanzmaß der Wiederholungsfolge (a) zweier aufeinanderfolgender Stellglieder (13) zu den der anderen Düsenlippe (5) zugeordneten Stellgliedern (13) versetzt liegen.

13. Breitschlitzdüse nach einem der Ansprüche 1 bis 11, **dadurch gekennzeichnet**, daß ein einen Zuführungs- und einen Rückführungskanal (57a, 57b) umfassendes Zwangskühlungssystem vorgesehen ist, worüber ein gasförmiges Kühlmedium vorzugsweise in einem Teillängsbereich der Einstellglieder (13) auf diese zuströmbar und vorzugsweise in dem jeweils anderen Teillängsbereich wieder abströmbar ist.

14. Breitschlitzdüse nach Anspruch 13, **dadurch gekennzeichnet**, daß die den Zuführungs- bzw. Rückführungskanal (57a, 57b) begrenzenden Leitbleche bis ganz oder fast auf die Frontseite der Stellglieder (13) reichen.

15. Breitschlitzdüse nach einem der Ansprüche 1 bis 14, **dadurch gekennzeichnet**, daß an der rückwärtigen Seite der Stellglieder (13) an der angrenzenden Wand des Düsenkörpers (7) eine den Düsenkörper (7) abdeckende Isolierung (61) vorgesehen ist.

16. Breitschlitzdüse nach einem der Ansprüche 1 bis 15, **dadurch gekennzeichnet**, daß in der eine Schwächung des Materialquerschnittes im Düsenkörper (7) bewirkende und die Verstellbarkeit der Düsenlippe (3) erzeugende Ausnehmung (9) eine schlauchförmige Dichtung (11) eingesetzt ist.

17. Breitschlitzdüse nach einem der Ansprüche 1 bis 16, **dadurch gekennzeichnet**, daß in Längsrichtung des Austrittsspaltes (1) versetzt liegend zwischen den Einstellgliedern (13) zumindest in deren frontseitigen Bereich in dem die Einstellglieder (13) mit der Düsenlippe (3) verbunden sind, Isolierungen eingesetzt sind.

18. Breitschlitzdüse nach einem der Ansprüche 1 bis 17, **dadurch gekennzeichnet**, daß die mechanische Voreinstelleinrichtung (37) eine in einer Grundplatte oder Traverse (43) eingedrehte Differenzialmutter (39) unterschiedlicher Innen- und Außengewinde umfaßt, in welche mehrere im wesentlichen in Radialrichtung verlaufende Schlitze (48) eingebracht sind, die in Axialrichtung zueinander versetzt und in unterschiedlicher Radialrichtung ausgerichtet sind, und daß zwischen den aufeinanderzuliegenden Stirnseiten eines zum Kontern dienenden Gewindezapfens (41) und des zur zumindest mittelbaren Justierung der Stellglieder (13) dienenden Gewindezapfens (35) in Axialhöhe der Schlitze (48) ein vorzugsweise in Form eines Stiftes (42) ausgebildetes Überbrückungsglied eingesetzt ist.

19. Breitschlitzdüse insbesondere nach einem der Ansprüche 1 bis 18, **dadurch gekennzeichnet**, daß eine motorisch und damit automatisch antreibbare Verstelleinrichtung (37') für die zumindest eine Grob- oder Voreinstelleinrichtung (37) vorgesehen ist, worüber mehrere in Längsrichtung des Austrittspaltes (1) versetzt liegende Gewindezapfen (35) so ansteuerbar sind, daß darüber die Axiallage der Stellglieder (13) zumindest mittelbar einstellbar ist.

20. Breitschlitzdüse nach Anspruch 19, dadurch gekennzeichnet, daß die Stellglieder (13) an ihrer zur Düsenlippe (3, 5) abgewandt liegenden Seite mittels eines Biegebalkens (79) gehalten sind, der zur Bewirkung einer Grob- oder Voreinstellung mittels einer Grob- oder Voreinstellungseinrichtung (37) verstellbar ist.

21. Breitschlitzdüse nach Anspruch 19 oder 20, **dadurch gekennzeichnet**, daß der Gruppenabstand (29') benachbarter Gruppen von Stellgliedern (13), die jeweils über einen Gewindezapfen (35) motorisch voreinstellbar sind, 30 mm bis 120 mm, vorzugsweise 40 mm bis 100 mm, insbesondere 50 mm bis 80 mm, insbesondere um 60 mm beträgt.

22. Breitschlitzdüse nach einem der Ansprüche 19 bis 21, **dadurch gekennzeichnet**, daß zumindest ein Motor für die motorische Vorstelleinrichtung (37') vorgesehen ist, wobei der Kraftfluß über die einem einzelnen Gruppenabschnitt (29') bzw. den einzelnen Gewindezapfen (35) jeweils zugeordnete Übertragungseinrichtung eine separat zuschaltbare Kupplung (75) umfaßt.

## Claims

1. Slot die of an extrusion apparatus for producing flat films, consisting of an upper and a lower die part with an upper and lower die lip (3, 5), which delimit the die gap (1) to the top and to the bottom, at least one of the two die lips (3, 5) being flexibly adjustable in its front region by appropriate driving by means of final control elements whose length is adjustable, and with rough-setting or presetting devices (37) assigned to the adjustable final control elements (13), characterized in that final control elements (13) which are adjacent to one another in the longitudinal direction of the die gap (1) and thus transversely to the direction of flow of the extrudate are combined to form groups of at least two final control elements (13) in each case, to which a common rough-setting or presetting device (37) is assigned.

2. Slot die of an extrusion apparatus for producing flat films, consisting of an upper and a lower die part with an upper and lower die lip (3, 5), which delimit the die gap (1) to the top and to the bottom, at least one of the two die lips (3, 5) being flexibly adjustable in its front region by appropriate driving by means of final control elements whose length is adjustable, and with rough-setting or presetting devices (37) assigned to the adjustable final control elements (13), characterized in that two final control elements (13) which are adjacent in succession in the longitudinal direction of the die gap (1) and thus transversely to the direction of flow of the extrudate are arranged or terminate offset, at their ends which are remote from the adjustable die lip (3, 5), with a transverse offset, i.e. transverse to the longitudinal direction of the die gap (1), and thus the associated rough-setting or presetting devices (37) of two adjacent final control elements (13) lie with a corresponding transverse offset, transverse to the longitudinal direction of the die gap (1), with respect to one another.

3. Slot die of an extrusion apparatus for producing flat films, consisting of an upper and a lower die part with an upper and lower die lip (3, 5), which delimit the die gap (1) to the top and to the bottom, at least one of the two die lips (3, 5) being flexibly adjustable in its front region by appropriate driving by means of final control elements whose length is adjustable, and with rough-setting or presetting devices (37) assigned to the adjustable final control elements (13), characterized in that the two die lips (3, 5) are provided with final control elements (13) whose length can be regulated, such that the final control elements (13) assigned to one die lip (3) are arranged offset with respect to the final control elements (13) assigned to the other die lip (5), and in that a presetting device (37) is assigned at least to the final control elements (13) acting on one of the two die lips (3, 5).

4. Slot die according to Claim 1, characterized in that, in the longitudinal direction of the die gap (1), the presetting devices (37) provided for the final control elements (13) are arranged with a repetition distance (a') which corresponds to the centre-to-centre distance of two adjacent final control elements (13), which is greater than the repetition distance (a) of the final control elements (13) and which preferably corresponds to at least twice the repetition distance (a) of the final control elements (13).

5. Slot die according to Claim 1 or 4, characterized in that a group (29) comprising at least two final control elements (13) is produced essentially in one piece and is divided by the introduction of at least one longitudinal slot (33) into the appropriate number of final control elements (13) which, on their side remote from the die lip (3, 5), rest on a base (31) connecting the final control elements (13).

6. Slot die according to Claim 2, characterized in that adjacent final control elements (13) which, in a side view running in the longitudinal direction of the die gap (1), are arranged or run so as to diverge in an approximately V-shaped manner from the adjustable die lip (3, 5) to their rear end are provided.

7. Slot die according to Claim 2, characterized in that adjacent final control elements (13) which, in a side view running in the longitudinal direction of the die gap (1), are designed to run oppositely angled off from the adjustable die lip (3, 5) to the rear end of the final control elements (13) are provided.

8. Slot die according to one of Claims 1 to 7, characterized in that, in the direction of the die gap (1), the final control elements (13) are arranged in a repeating sequence (a) with a centre-to-centre distance of two adjacent final control elements (13) of less than 25 mm, preferably less than 20 mm, and in that the width (b) of the final control elements (13) in the direction of the die gap (1) is less than 20 mm.

9. Slot die according to one of Claims 1 to 8, characterized in that the distance of the repetition sequence (a) of two successive control elements (13) following is less than 16 mm, preferably less than 12 mm, in particular about 10 mm.

10. Slot die according to one of Claims 1 to 9, characterized in that the width (b) of the individual final control elements (13) is less than 10 mm, in particular less than 9 mm, in particular about 8 to 9 mm.

11. Slot die according to one of Claims 1 to 10, characterized in that the free spacing (d) between two successive control elements (13) which follow is less than 8 mm, in particular less than 6 mm, [lacuna] less than 4 mm and in particular less than 1.5 mm.

12. Slot die according to one of Claims 3 or 8, 9, 10 or 11, if dependent on Claim 3 to 7, 8, 9 or 10, characterized in that the final control elements (13) assigned to one die lip (3) are offset with respect to the final control elements (13) assigned to the other die lip (5) by half the distance of the repetition sequence (a) of two successive final control elements (13).

13. Slot die according to one of Claims 1 to 11, characterized in that an intensive cooling system comprising a feed duct and a return duct (57a, 57b) is provided, by means of which a gaseous coolant can flow onto the adjusting element (13) with preference in one partial longitudinal region of the said adjusting elements (13) and can flow away again with preference in the respectively other partial longitudinal region.

14. Slot die according to Claim 13, characterized in that the baffles delimiting the feed and return ducts (57a, 57b) extend as far as, or almost as far as, the front of the final control elements (13).

15. Slot die according to one of Claims 1 to 14, characterized in that an insulation (61) covering the die body (7) is provided on the rear side of the final control elements (13) on the adjoining wall of the die body (7).

16. Slot die according to one of Claims 1 to 15, characterized in that a flexible tube-like seal (11) is inserted in the recess (9) which effects a weakening of the material cross-section in the die body (7) and produces the adjustability of the die lip (3).

17. Slot die according to one of Claims 1 to 16, characterized in that insulations are inserted, lying offset in the longitudinal direction of the die gap (1), between the adjusting elements (13), at least in their front region in which the adjusting elements (13) are connected to the die lip (3).

18. Slot die according to one of Claims 1 to 17, characterized in that the mechanical presetting device (37) comprises a differential nut (39) having different internal and external threads and screwed into a base plate or cross-member (43), which nut includes a plurality of slots (48) running essentially in a radial direction, which slots are offset with respect to one another in the axial direction and are aligned in different radial directions, and in that a bridging element, preferably configured in the form of a pin (42), is inserted at the axial height of the slots (48) between the mutually facing end faces of a threaded journal (41) used for locking and of the threaded journal (35) used for at least indirectly adjusting the final control elements (13).

19. Slot die in particular according to one of Claims 1 to 18, characterized in that a displacement device (37') which can be driven by means of a motor, and thus automatically, is provided for the at least one rough-setting or presetting device (37), by means of which displacement device a plurality of threaded journals (35) which are offset in the longitudinal direction of the die gap (1) can be driven such that the axial position of the final control elements (13) can be at least indirectly adjusted thereby.

20. Slot die according to Claim 19, characterized in that the final control elements (13) are held on their side remote from the die lip (3, 5) by means of a flexural beam (79), which can be displaced in order to effect a rough setting or presetting by means of a rough setting or presetting device (37).

21. Slot die according to Claim 19 or 20, characterized in that the group spacing (29') between adjacent groups of final control elements (13), which can in each case be preset by means of a motor via a threaded journal (35), is 30 mm to 120 mm, preferably 40 mm to 100 mm, in particular 50 mm to 80 mm, in particular about 60 mm.

22. Slot die according to one of Claims 19 to 21, characterized in that at least one motor is provided for the motorized presetting device (37'), the power flux via the transmission device respectively assigned to a single group section (29') or the individual threaded journals (35) comprising a separately connectable coupling (75).

## Revendications

1. Filière à fente large pour une installation d'extrusion pour la production de feuilles planes, comprenant une partie de filière supérieure et une partie de filière inférieure avec une lèvre de filière supérieure et une lèvre de filière inférieure (3, 5), qui limitent la fente de sortie (1) vers le haut et vers le bas, l'une au moins des deux lèvres de filière (3, 5) pouvant être ajustée dans sa région antérieure de façon flexible par un pilotage correspondant au moyen d'organes de positionnement (13) réglables quant à leurs longueurs, et comprenant des dispositifs de réglage grossier ou de préréglage (37) associés aux organes de positionnement réglables (13), caractérisée en ce que dans la direction longitudinale de la fente de sortie (1) et ainsi perpendiculairement à la direction de l'écoulement de la matière extrudée, les organes de positionnement situés au voisinage les uns des autres (13) sont regroupés pour former des groupes qui comprennent chacun au moins deux organes de positionnement (13), auxquels est associé un dispositif de réglage grossier ou de préréglage commun (37).

2. Filière à fente large pour une installation d'extrusion pour la production de feuilles planes, comprenant une partie de filière supérieure et une partie de filière inférieure avec une lèvre de filière supérieure et une lèvre de filière inférieure (3, 5), qui délimitent la fente de sortie (1) vers le haut et vers le l'as, l'une au moins des deux lèvres de filière (3, 5) pouvant être ajustée de manière flexible dans sa région antérieure par un pilotage correspondant au moyen d'organes de positionnement (13) réglables quant à leurs longueurs, et comprenant des dispositifs de réglage grossier ou de préréglage (37) associés aux organes de positionnement réglables (13), caractérisée en ce que deux organes de positionnement voisins qui se suivent dans la direction longitudinale de la fente de sortie (1) et donc perpendiculairement à la direction d'écoulement de la matière extrudée sont agencés ou se terminent au niveau de leurs extrémités détournées de la lèvre de filière réglable (3, 5) avec un déport transversal, c'est-à-dire de façon décalée perpendiculairement à la direction longitudinale de la fente de sortie (1), et ainsi que les dispositifs de réglage grossier ou de préréglage (37) associés à deux organes de positionnement voisins (13) sont disposés l'un par rapport l'autre avec un déport transversal correspondant perpendiculairement à la direction longitudinale de la fente de sortie (1).

3. Filière à fente large pour une installation d'extrusion pour la production de feuilles planes, comprenant une partie de filière supérieure et une partie de filière inférieure avec une lèvre de filière supérieure et une lèvre de filière inférieure (3, 5), qui délimitent la fente de sortie (1) vers le haut et vers le bas, et l'une au moins des deux lèvres de filière (3, 5) pouvant être ajustée de manière flexible dans sa région antérieure par un pilotage correspondant au moyen d'organes de positionnement (13) réglables quant à leurs longueurs, et comprenant des dispositifs de réglage grossier ou de préréglage (37) associés aux organes de positionnement réglables (13), caractérisée en ce que les deux lèvres de filière (3, 5) sont pourvues d'organes de positionnement réglables quant à leurs longueurs (13) de telle manière que les organes de positionnement (13) associés à l'une des lèvres de filière (3) sont décalés par rapport aux organes de positionnement (13) associés à l'autre lèvre de filière (5), et en ce qu'un dispositif de préréglage (37) est associé au moins aux organes de positionnement (13) qui agissent sur l'une des deux lèvres de filière (3, 5).

4. Filière à fente large selon la revendication 1, caractérisée en ce que les dispositifs de préréglage (37) prévus pour les organes de positionnement (13) sont agencés dans la direction longitudinale de la fente de sortie (1) avec une distance répétitive (a') qui correspond à la distance de centre à centre entre deux organes de positionnement voisins (13), cette distance étant supérieure à la distance de répétition (a) des organes de positionnement (13), qui correspond de préférence au moins au double de la distance de répétition (a) des organes de positionnement (13).

5. Filière à fente large selon l'une ou l'autre des revendications 1 et 4, caractérisée en ce qu'un groupe (29) qui comprend au moins deux organes de positionnement (13) est réalisé sensiblement d'une seule pièce, et est subdivisé pour former le nombre correspondant d'organes de positionnement (13) en ménageant au moins une fente longitudinale (33), lesdits organes de positionnement reposant sur une base (31) qui relie les organes de positionnement (13), sur le côté détourné des lèvres de filière (3, 5).

6. Filière à fente large selon la revendication 2, caractérisée en ce que l'on prévoit des éléments de positionnement voisins (13) qui sont agencés ou s'étendent en divergeant approximativement sous la forme d'un V depuis la lèvre de filière réglable (3, 5) jusqu'à leurs extrémités arrière, dans une vue latérale prise en direction longitudinale de la fente de sortie (1).

7. Filière à fente large selon la revendication 2, caractérisée en ce que l'on prévoit des éléments de positionnement voisins (13) qui sont réalisés de manière à s'étendre de manière coudée en sens opposé depuis la lèvre de filière réglable (3, 5) jusqu'à l'extrémité arrière des organes de positionnement (13), dans une vue latérale prise en direction longitudinale de la fente de sortie (1).

8. Filière à fente large selon l'une quelconque des revendications 1 à 7, caractérisée en ce que les organes de positionnement (13) sont agencés en direction de la fente de sortie (1) suivant une succession (a) avec une distance de centre à centre entre deux organes de positionnement voisins (13) inférieure à 25 mm, de préférence inférieure à 20 mm, et en ce que la largeur (b) des organes de positionnement (13) en direction de la fente de sortie (1) est inférieure à 20 mm.

9. Filière à fente large selon l'une quelconque des revendications 1 à 8, caractérisée en ce que la valeur de la distance de la succession (a) de deux organes de positionnement successifs (13) est inférieure à 16 mm, de préférence inférieure à 12 mm, en particulier voisine de 10 mm.

10. Filière à fente large selon l'une quelconque des revendications 1 à 9, caractérisée en ce que la largeur (b) des organes de positionnement individuels (13) est inférieure à 10 mm, en particulier inférieure à 9 mm, en particulier voisine de 8 à 9 mm.

11. Filière à fente large selon l'une quelconque des revendications 1 a 10, caractérisée en ce que la distance libre (d) de deux organes de positionnement successifs (13) est inférieure à 8 mm, en particulier inférieure à 6 mm, inférieure à 4 mm et en particulier inférieure à 1,5 mm.

12. Filière à fente large selon l'une quelconque des revendications 3, 8, 9, 10 ou 11, prise en dépendance des revendications 3 à 7, 8, 9 ou 10, caractérisée en ce que les organes de positionnement (13) associés à l'une des lèvres de filière (3) sont associés de manière décalée de la moitié de la valeur de distance de la succession (a) de deux organes de positionnement successifs (13) vis-à-vis des organes de positionnement (13) associés à l'autre lèvre de filière (5).

13. Filière à fente large selon l'une quelconque des revendications 1 à 11, caractérisée en ce qu'il prévu un système de refroidissement forcé qui comprend un conduit d'amenée et un conduit de retour (57a, 57b), au moyen duquel on peut faire s'écouler un agent de refroidissement gazeux de préférence dans une région partielle de la longueur des organes de positionnement (13) en direction de ceux-ci, et au moyen duquel on peut à nouveau évacuer celui-ci de préférence dans l'autre région partielle de la longueur.

14. Filière à fente large selon la revendication 13, caractérisée en ce que les tôles de guidage qui délimitent le conduit d'amenée et le conduit de retour (57a,57d) s'étendent entièrement jusqu'à la face frontale des organes de positionnement (13) ou presque jusqu'à celle-ci.

15. Filière à fente large selon l'une quelconque des revendications 1 à 14, caractérisée en ce qu'il est prévu sur le côté arrière des organes de positionnement (13) contre la paroi adjacente du corps de filière (7) une isolation (61) qui recouvre le corps de filière (7).

16. Filière à fente large selon l'une quelconque des revendications 1 à 15, caractérisée en ce que l'on met en place un joint en forme de tuyau (11) dans un évidement (9) qui réalise un affaiblissement de la section du matériau dans le corps de filière (7) et qui produit la mobilité des lèvres de filière (3).

17. Filière à fente large selon l'une quelconque des revendications 1 à 16, caractérisée en ce que des isolations sont mises en place de manière à être décalées en direction longitudinale de la fente de sortie (1) entre les organes de positionnement (13) au moins dans leur région du côté frontal dans laquelle les organes de positionnement (13) sont reliés à la lèvre de filière (3).

18. Filière à fente large selon l'une quelconque des revendications 1 à 17, caractérisée en ce que le dispositif de préréglage mécanique (37) comprend un écrou différentiel (39) vissé dans une plaque de base ou traverse (43) et présentant des pas de vis intérieur et extérieur différents, dans lequel sont ménagées plusieurs fentes (48) qui s'étendent sensiblement en direction radicale, qui sont décalées les unes par rapport aux autres en direction axiale et sont dirigées suivant des directions radiales différentes, et en ce qu'entre les côtés frontaux tournés l'un vers l'autre d'un tenon fileté (41) qui sert au blocage et du tenon fileté (35) qui sert au moins indirectement à l'ajustement des organes de positionnement (13), il est prévu un organe de montage mis en place dans la hauteur axiale des fentes (48) et de préférence sous la forme d'une tige (42).

19. Filière à fente large, en particulier selon l'une quelconque des revendications 1 à 18, caractérisée en ce qu'il prévu un dispositif de réglage motorisé (37') et ainsi capable d'être entraîné automatiquement pour ledit dispositif de réglage grossier ou de préréglage (37), au moyen duquel on peut piloter plusieurs tenons filetés (35) situés de manière décalée en direction longitudinale de la fente de sortie (1), de telle manière que l'on peut régler au moins indirectement au moyen de celui-ci la position axiale des organes de positionnement (13).

20. Filière à fente large selon la revendication 19, caractérisée en ce que les organes de positionnement (13) sont maintenus à leur côté détourné de la lèvre de filière (3, 5) au moyen d'une barre de flexion (79), qui est susceptible d'être réglée au moyen d'un dispositif de réglage grossier ou de préréglage (37) pour réaliser un réglage grossier ou un préréglage.

21. Filière à fente large selon l'une ou l'autre des revendications 19 ou 20, caractérisée en ce que la distance (29') entre groupes voisins d'organes de positionnement (13), qui sont respectivement susceptibles d'être préréglés de façon motorisée au moyen d'un tenon fileté (35), s'élève de 30 millimètres à 120 mm, de préférence 40 mm à 100 mm, en particulier 50 mm à 80 mm, et en particulier environ 60 mm.

22. Filière à fente large selon l'une quelconque des revendications 19 à 21, caractérisée en ce qu'il est prévu au moins un moteur pour le dispositif de préréglage motorisé (37'), et le trajet d'écoulement des efforts via le dispositif de transmission respectivement associé à un sous-groupe individuel (29') ou à un tenon fileté individuel (35) comprend un accouplement (75) susceptible d'être enclenché séparément.
